# EUROPÄISCHE PATENTSCHRIFT

(11) **EP 4 522 874 B1**
(45) Veröffentlichungstag und Bekanntmachung des Hinweises auf die Patenterteilung: **18.02.2026**
(21) Anmeldenummer: 23721957.1
(22) Anmeldetag: 02.05.2023
(51) Int. Cl.: F16B 13/00, F16B 13/08

(54) **SELBSTSCHNEIDENDER HINTERSCHNITTANKER**
SELF-CUTTING UNDERCUT ANCHOR
DISPOSITIF D'ANCRAGE DE CONTRE-DÉPOUILLE À COUPE AUTOMATIQUE

(30) Priorität: 11.05.2022 DE 102022111728
(43) Veröffentlichungstag der Anmeldung: 19.03.2025
(73) Patentinhaber: fischerwerke GmbH & Co. KG, 72178 Waldachtal (DE)
(72) Erfinder: ECHLE, Benjamin, 77709 Oberwolfach (DE); LINKA, Martin, 72160 Horb a.N. (DE)
(86) Internationale Anmeldenummer: PCT/EP2023/061441
(87) Internationale Veröffentlichungsnummer: WO 2023/217566

(56) Entgegenhaltungen:
- WO-A1-2021/197897
- DE-A1- 102020 105 259

## Beschreibung

Die Erfindung betrifft einen selbstschneidenden Hinterschnittanker mit den Merkmalen des Oberbegriffs des Anspruchs 1 und ein Verfahren zur Herstellung des Hinterschnittankers mit den Merkmalen des Oberbegriffs des Anspruchs 9.

Hinterschnittanker sind Spreizanker, die durch Aufspreizen einer Spreizhülse in einer Hinterschneidung in einem Ankerloch verankert werden. Durch das Aufspreizen sind die Spreizanker durch Formschluss in der Hinterschneidung gegen Herausziehen aus dem Ankerloch gehalten, das heißt durch Formschluss verankert. "Selbstschneidend" bedeutet, dass der Hinterschnittanker die Hinterschneidung im Ankerloch selbst erstellt.

Die Offenlegungsschrift DE 10 2020 105 259 A1 offenbart einen Hinterschnittanker mit einem stangenförmigen Ankerschaft, der einen kegelstumpfförmigen Spreizkörper an einem vorderen Ende aufweist. Auf dem Ankerschaft ist eine Spreizhülse angeordnet, die an ihrem vorderen, dem Spreizkörper zugewandten Ende durch Längsschlitze in zylinderschalenförmig gewölbte Spreizelemente unterteilt ist, die durch Aufschieben auf den Spreizkörper radial nach außen geschwenkt werden, was als "Aufspreizen" der Spreizelemente, der Spreizhülse und des Hinterschnittankers aufgefasst werden kann. Durch Laser-Pulver-Auftragschweißen wird außen an vorderen Enden der Spreizelemente eine Funktionsschicht in zwei Schichten nacheinander auf die Spreizelemente aufgebracht, wobei das Pulver in Stahl eingebettete Hartstoffpartikel aus Wolframcarbid aufweist. Nach dem Auftragschweißen wird die Funktionsschicht durch Pressen kalt zu Schneidelementen umgeformt, die bei einem Drehen und gleichzeitigem Vorschub der Spreizhülse und Aufspreizen der Spreizelemente der Spreizhülse in einem Ankerloch die Hinterschneidung im Ankerloch schneiden.

Aufgabe der Erfindung ist, einen selbstschneidenden Hinterschnittanker der vorstehend erläuterten Art mit stabileren Schneidelementen und ein Verfahren zur Herstellung des Hinterschnittankers vorzuschlagen.

Diese Aufgabe wird erfindungsgemäß durch die Merkmale der Ansprüche 1 und 9 gelöst. Die abhängigen Ansprüche haben vorteilhafte Ausgestaltungen und Weiterbildungen der Erfindung zum Gegenstand.

Der erfindungsgemäße Hinterschnittanker erstreckt sich entlang einer Längsachse und weist einen Spreizkörper und eine Spreizhülse mit mindestens einem Spreizelement an einem vorderen Ende der Spreizhülse auf. Der Spreizkörper ist insbesondere kegelstumpfförmig und kann insbesondere eine oder mehrere Stufen aufweisen. Der Spreizkörper bestimmt sich anhand seiner Funktion, das mindestens eine Spreizelement aufzuspreizen. Das vordere Ende der Spreizhülse und des mindestens einen Spreizelements ist ein dem Spreizkörper zugewandtes Ende der Spreizhülse beziehungsweise des mindestens einen Spreizelements. Zum Aufspreizen wird die Spreizhülse derart in Richtung der Längsachse in Richtung des Spreizkörpers verschoben, dass das mindestens eine Spreizelement an den Spreizkörper gelangt und von dem Spreizkörper von der Längsachse des Hinterschnittankers weg nach außen geschwenkt wird. Das Nachaußenschwenken des mindestens einen Spreizelements kann auch als Aufspreizen des Spreizelements, der Spreizhülse und des Hinterschnittankers aufgefasst werden. Die Richtung, in der die Spreizhülse in Bezug zu dem Spreizkörper verschoben wird, um das mindestens eine Spreizelement aufzuspreizen, ist eine Spreizrichtung. Durch Aufspreizen in einer Hinterschneidung in einem Ankerloch gelangt das mindestens eine Spreizelement in einen Hintergriff an beziehungsweise in der Hinterschneidung, wodurch der Hinterschnittanker durch einen Formschluss seines mindestens einen, nach außen in die Hinterschneidung geschwenkten, das heißt aufgespreizten Spreizelements seiner Spreizhülse an beziehungsweise in der Hinterschneidung in dem Ankerloch gehalten ist, was als Verankerung des Hinterschnittankers durch Formschluss in dem Ankerloch aufgefasst werden kann. Durch das Aufspreizen kann der Hinterschnittanker zusätzlich zu dem Formschluss durch einen Kraft- beziehungsweise Reibschluss in dem Ankerloch gehalten sein.

Durch Auftragschweißen ist ein Schneidelement außen an einer Außenseite des mindestens einen Spreizelements angebracht. Das Schneidelement ist insbesondere an einem vorderen, dem Spreizkörper zugewandten Ende oder nahe dem vorderen Ende des mindestens einen Spreizelements aufgeschweißt. Das Schneidelement bekommt das Schneidelement insbesondere direkt durch das Auftragsschweißen, so dass eine nachträgliche Bearbeitung vorteilhafterweise nicht erforderlich ist. Alternativ bekommt das Schneidelement seine endgültige Form nach dem Auftragschweißen beispielsweise durch Umformen oder spanende Bearbeitung der Auftragsschweißung. Erfindungsgemäß ist das Schneidelement in mindestens zwei Schweißstreifen außen auf der Außenseite des mindestens einen Spreizelements aufgeschweißt, wobei die beiden Schweißstreifen in einer Längsrichtung des Hinterschnittankers, das heißt parallel zu der Längsachse, hintereinander angeordnet sind und ineinander übergehen. Die Schweißstreifen sind beispielsweise linienförmige oder streifenförmige Schweißraupen, Schweißnähte oder dergleichen. Dadurch, dass mindestens zwei Schweißstreifen außen auf der Außenseite des mindestens einen Spreizelements aufgeschweißt sind, lässt sich ein in Richtung der Längsachse des Hinterschnittankers breites Schneidelement außen an dem mindestens einen Spreizelement der Spreizhülse des erfindungsgemäßen Hinterschnittankers anbringen. Außerdem ermöglicht die erfindungsgemäße Auftragschweißung zweier Schweißstreifen in der Längsrichtung des Hinterschnittankers hintereinander ein nach vorn über das vordere Ende des mindestens einen Spreizelements überstehendes Schneidelement oder verbessert jedenfalls seine Stabilität, wenn das Schneidelement nach vorn über das vordere Ende des mindestens einen Spreizelements übersteht.

Eine Weiterbildung sieht vor, dass zur Bildung des Schneidelements außen auf dem Spreizelement Schweißstreifen nicht nur in der Längsrichtung des Hinterschnittankers hintereinander, sondern auch Schweißstreifen radial aufeinander außen auf dem mindestens einen Spreizelement aufgebracht sind, derart, dass das Schneidelement eine größere Dicke beziehungsweise Höhe in radialer Richtung der Spreizhülse aufweist.

Vorzugsweise weisen radial innere, unmittelbar auf das mindestens eine Spreizelement der Spreizhülse des erfindungsgemäßen Hinterschnittankers aufgebrachte Schweißstreifen eine kleinere Dicke beziehungsweise Höhe in radialer Richtung der Spreizhülse auf als radial außen auf die radial inneren Schweißstreifen aufgebrachte, radial äußere Schweißstreifen. Die unmittelbar auf das mindestens eine Spreizelement aufgebrachten, radial inneren Schweißstreifen tragen beim Auftragschweißen durch ihre geringere Dicke beziehungsweise Höhe weniger Wärme in das mindestens eine Spreizelement ein, wodurch ein Festigkeitsverlust durch Wärmeeintrag verringert ist.

Eine Weiterbildung der Erfindung sieht vor, dass zumindest ein Schweißstreifen in einer Umfangsrichtung der Spreizhülse dünner wird. Das ermöglicht eine Keilform oder Sägezahnform oder allgemein eine sich ändernde Dicke beziehungsweise Höhe des Schneidelements in der Umfangsrichtung der Spreizhülse.

Eine Keilform oder Sägezahnform des Schneidelements oder jedenfalls eine radial zur Spreizhülse abgestufte oder sich ändernde Höhe des Schneidelements ermöglichen auch in der Umfangsrichtung der Spreizhülse unterschiedlich lange, radial aufeinander aufgebrachte Schweißstreifen.

Eine Ausgestaltung der Erfindung sieht einen nach vorn auskragenden, das heißt über das vordere Ende des mindestens einen Spreizelements überstehenden Schweißstreifen vor. Wahlweise kann auch ein radial äußerer Schweißstreifen nach vorn über einen radial inneren Schweißstreifen überstehen, wobei der radial äußere Schweißstreifen auch über das vordere Ende des mindestens einen Spreizelements überstehen kann, allerdings nicht in jedem Fall überstehen muss. Ein axial vorderer, radial äußerer Schweißstreifen kann auch gegenüber dem vorderen Ende des mindestens einen Spreizelements axial zurückversetzt sein.

Eine bevorzugte Ausgestaltung der Erfindung sieht vier Schweißstreifen vor, die durch Auftragschweißen außen auf der Außenseite des mindestens einen Spreizelements aufgebracht sind. Es sind zwei radial innere Schweißstreifen in der Längsrichtung des Hinterschnittankers hintereinander außen auf das Spreizelement aufgebracht und zwei radial äußere Schweißstreifen radial außen auf die radial inneren Schweißstreifen. Die radial äußeren Schweißstreifen sind ebenfalls in der Längsrichtung des Hinterschnittankers hintereinander außen auf dem mindestens einen Spreizelement beziehungsweise auf den radial inneren Schweißstreifen aufgebracht und gehen ineinander über. In der Längsrichtung des Hinterschnittankers können die radial äußeren Schweißstreifen ohne Versatz oder mit Versatz in der Längsrichtung zu den radial inneren Schweißstreifen auf den radial inneren Schweißstreifen aufgebracht sein.

Ein Ende des Schneidelements ist bei einer Ausgestaltung der Erfindung in der Umfangsrichtung in einer Mitte des mindestens einen Spreizelements angeordnet. Das Ende des Schneidelements kann auch in einem mittleren Abschnitt, der sich über etwa ein Viertel oder etwa ein Drittel in der Umfangsrichtung des mindestens einen Spreizelements erstreckt, angeordnet sein. Diese Ausgestaltung der Erfindung ermöglicht eine Schneide in der Umfangsmitte oder in dem mittleren Abschnitt des Spreizelements.

Das erfindungsgemäße Verfahren mit den Merkmalen des Anspruchs 9 sieht das Aufbringen oder Auftragen der Schweißstreifen beispielsweise in Form von Schweißraupen oder Schweißnähten durch Auftragschweißen außen auf einer Außenseite des mindestens einen Spreizelements der Spreizhülse des erfindungsgemäßen Hinterschnittankers vor. Insbesondere bilden die Schweißstreifen das Schneidelement, ohne dass eine weitere Bearbeitung der Schweißstreifen erfolgt. Alternativ werden die Schweißstreifen beispielsweise durch Umformen und/oder spanendes Bearbeiten der Auftragschweißung zu dem Schneidelement geformt. Insbesondere werden die Schweißstreifen am vorderen Ende oder nahe am vorderen Ende außen auf das mindestens eine Spreizelement aufgebracht.

Um die radiale Dicke beziehungsweise Höhe der Schweißstreifen in der Umfangsrichtung der Spreizhülse zu vergrößern, werden die Schweißstreifen in der Umfangsrichtung der Spreizhülse auf das mindestens eine Spreizelement aufgetragen und es wird eine Schweißgeschwindigkeit verringert. Um die Dicke der Schweißstreifen zu verringern, wird die Schweißgeschwindigkeit erhöht.

Eine andere Möglichkeit zur Änderung der Dicke beziehungsweise Höhe der Auftragschweißung ist eine Änderung eines Wärmeeintrags während der Auftragschweißung.

Vorzugsweise werden die das Spreizelement bildendenden Schweißstreifen durch Laserauftragschweißen außen auf das mindestens eine Spreizelement aufgebracht.

Zur Änderung der Dicke der Auftragschweißung können erfindungsgemäß eine Laserleistung und/oder ein Abstand eines Fokus eines Laserstrahls von der Außenseite des Spreizelements der Spreizhülse während der Laserauftragschweißung geändert werden.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:

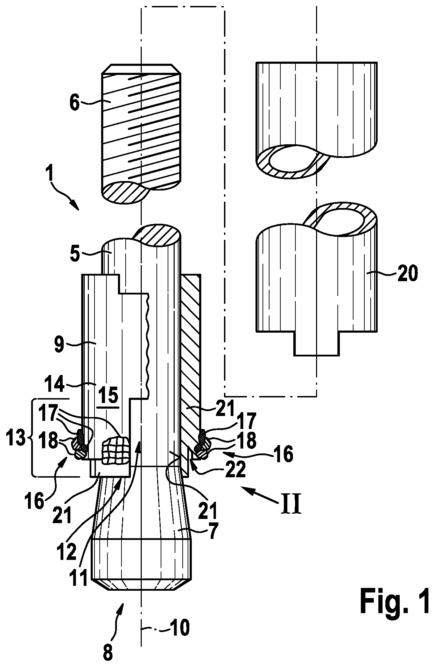

- Figur 1: einen Halbschnitt eines erfindungsgemäßen Hinterschnittankers;
- Figur 2: eine vergrößerte Einzelheit gemäß Pfeil II in Figur 1;
- Figur 3: eine Verankerung des Hinterschnittankers aus Figur 1 in einem Ankerloch.

Der in der Zeichnung dargestellte, erfindungsgemäße Hinterschnittanker 1 ist zu einer Verankerung in einem insbesondere zylindrischen Ankerloch 2 vorgesehen. Der Hinterschnittanker 1 ist selbstschneidend, das heißt der Hinterschnittanker 1 erstellt eine Hinterschneidung 3 in dem Ankerloch 2, die der Hinterschnittanker 1 formschlüssig hintergreift, wenn er in der Hinterschneidung 3 aufgespreizt ist. Das Ankerloch 2 ist zuvor in einen Ankergrund 4 aus beispielsweise Beton, Stein oder Mauerwerk als zylindrisches Sackloch gebohrt worden.

Der Hinterschnittanker 1 weist einen Ankerschaft 5 mit einem Gewinde 6 an einem hinteren Ende und mit einem kegelstumpfförmigen Spreizkörper 7 an einem vorderen Ende 8 und eine auf dem Ankerschaft 5 angeordnete Spreizhülse 9 auf. Der Spreizkörper 7 erweitert sich nach vorn. Der Ankerschaft 5, der Spreizkörper 7 und die Spreizhülse 9 sind koaxial zu einer Längsachse 10 des Hinterschnittankers 1. Im Ausführungsbeispiel ist der Spreizkörper 7 einstückig mit dem Ankerschaft 5, was allerdings nicht zwingend für die Erfindung ist.

Die Spreizhülse 9 weist Längsschlitze 11 auf, die sich von einem vorderen, dem Spreizkörper 7 zugewandten Ende 12 der Spreizhülse 9 ausgehend über einen Teil einer axialen Länge der Spreizhülse 9 erstrecken. Die Längsschlitze 11 müssen sich nicht - wie im Ausführungsbeispiel - gerade in Axialebenen der Spreizhülse 9 erstrecken, sondern können beispielsweise auch wendelförmig in einem Winkel zu den Axialebenen, wellenförmig oder zickzack-förmig verlaufen. Die Aufzählung ist beispielhaft und nicht abschließend. Durch die Längsschlitze 11 ist die Spreizhülse 9 in einem Spreizabschnitt 13, der an dem vorderen, dem Spreizkörper 7 zugewandten vorderen Ende 12 der Spreizhülse 9 beginnt und sich über den Teil der axialen Länge der Spreizhülse 9 erstreckt, in Spreizelemente 14 unterteilt. Die Spreizelemente 14 können im Ausführungsbeispiel als Laschen oder Zungen aufgefasst werden, die in einer Umfangsrichtung der Spreizhülse 9 zylinderschalenförmig gewölbt sind und die sich in Richtung des kegelstumpfförmigen Spreizkörpers 7 erstrecken, wo die Spreizelemente 14 die freien, vorderen Enden 12 aufweisen, die zugleich das vordere Ende 12 der Spreizhülse 9 sind.

Durch eine Axialverschiebung der Spreizhülse 9 in Richtung der Längsachse 10 auf dem Ankerschaft 5 in Richtung zum Spreizkörper 7 hin werden die Spreizelemente 14 der Spreizhülse 9 auf den Spreizkörper 7 aufgeschoben. Beim Aufschieben drückt der Spreizkörper 7, der sich in der beschriebenen Verschieberichtung der Spreizhülse 9 erweitert, die Spreizelemente 14 der Spreizhülse 9 radial auseinander, wodurch die vorderen Enden 12 der Spreizelemente 14 von der Längsachse 10 des Hinterschnittankers 1 weg nach außen geschwenkt werden. Das Auseinanderschwenken der Spreizelemente 14 kann auch als Aufspreizen der Spreizelemente 14, der Spreizhülse 9 und des Hinterschnittankers 1 aufgefasst werden.

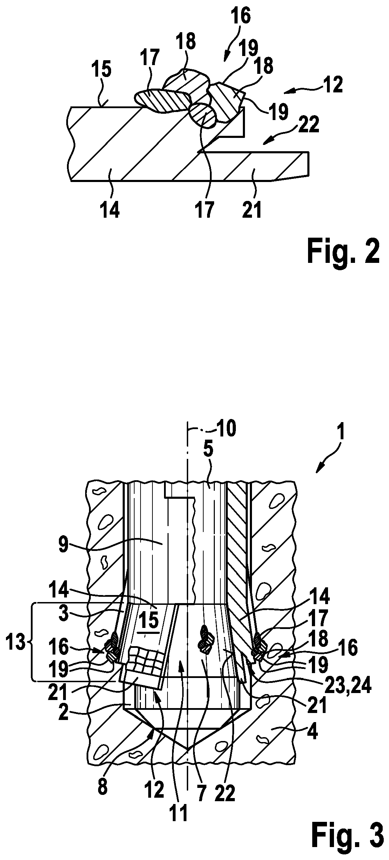

Wie insbesondere in der Vergrößerung der Figur 2 zu sehen ist, sind an den Außenseiten 15 der Spreizelemente 14 der Spreizhülse 9 Schneidelemente 16 angeordnet. Die Außenseiten 15 sind dem Ankerschaft 5 und dem Spreizkörper 7 abgewandte Seiten der Spreizelemente 14.

Die Schneidelemente 16 sind durch Auftragschweißen stoffschlüssig an den vorderen Enden 12 der Spreizhülse 9 auf die Außenseiten 15 der Spreizelemente 14 aufgebracht. Im Ausführungsbeispiel sind die Schneidelemente 16 durch Laserauftragschweißen außen auf die Schneidelemente 16 aufgebracht. Ein Schweißwerkstoff ist ein Metallpulver das Hartstoffpartikel, beispielsweise Hartmetallpartikel oder Keramikpartikel, enthalten kann. Andere Schweißwerkstoffe sind möglich.

Es werden mehrere Schweißstreifen 17, 18 axial hintereinander und radial aufeinander an den vorderen Enden 12 der Spreizhülse 9 auf die Außenseiten 15 der Spreizelemente 14 aufgeschweißt, die stoffschlüssig ineinander übergehen und die die Schneidelemente 16 bilden (Figur 2). Im Ausführungsbeispiel sind zwei radial innere Schweißstreifen 17 axial hintereinander und so dicht aneinander, dass sie stoffschlüssig ineinander übergehen, unmittelbar außen auf die Spreizelemente 14 aufgebracht, in die die radial inneren Schweißstreifen 17 ebenfalls stoffschlüssig übergehen. Radial in Bezug auf die Längsachse 10 außen sind im Ausführungsbeispiel zwei radial äußere Schweißstreifen 18 auf die radial inneren Schweißstreifen 17 durch das Auftragsschweißen aufgebracht. Die äußeren Schweißstreifen 18 sind ebenfalls axial hintereinander und so dicht aneinander angeordnet, dass sie stoffschlüssig ineinander übergehen. Außerdem gehen die radial äußeren Schweißstreifen 18 durch das Auftragsschweißen stoffschlüssig in die radial inneren Schweißstreifen 17 über.

Die äußeren Schweißstreifen 18 können ohne Versatz in der Längsrichtung des Hinterschnittankers 1 beziehungsweise der Spreizhülse 9 auf die inneren Schweißstreifen 17 aufgeschweißt sein. Im Ausführungsbeispiel weisen sie einen Versatz auf: Die äußeren Schweißstreifen 18 sind parallel zur Längsachse 10 nach vorn, das heißt in Richtung des Spreizkörpers 7 versetzt zu den inneren Schweißstreifen 17 auf die inneren Schweißstreifen aufgeschweißt. Im Ausführungsbeispiel beträgt der Versatz ungefähr eine Hälfte einer Breite der inneren Schweißstreifen 17, das heißt ein hinterer äußerer Schweißstreifen 18 befindet sich in der Längsrichtung des Hinterschnittankers 1 gesehen in einer Mitte der inneren Schweißstreifen 17 und ein vorderer äußerer Schweißstreifen 18 steht nach vorn über einen vorderen inneren Schweißstreifen 17 über. Ebenfalls im Ausführungsbeispiel steht der vordere innere Schweißstreifen 17 über das vordere Ende 12 der Spreizelemente 14 über. Dadurch ist es möglich, eine Schneide 19 an einer vordersten Stelle der Spreizelemente 16 auszubilden.

Die Schweißstreifen 17, 18 sind streifenförmige oder linienförmige Schweißraupen oder Schweißnähte, die durch das Auftragschweißen außen auf die Spreizelemente 14 aufgebracht sind.

Die inneren Schweißstreifen 17 sind dünn und jedenfalls dünner als die äußeren Schweißstreifen 18, damit ein Wärmeeintrag in die Spreizelemente 14 durch das Auftragschweißen, der eine Festigkeit der Spreizelemente 14 beeinträchtigen kann, klein ist.

Die Schweißstreifen 17, 18 sind in einer Umfangsrichtung der Spreizhülse 9 verlaufend an den vorderen Enden 12 der Spreizhülse 9 auf die Außenseiten 15 der Spreizelemente 14 aufgeschweißt. Die Schweißstreifen 17, 18 und damit auch die Schneidelemente 16 beginnen in der Umfangsrichtung gesehen etwa in einer Mitte der Spreizelemente 14 und erstrecken sich von dort entgegen einer vorgesehenen Drehrichtung der Spreizhülse 9 bei der Erstellung der Hinterschneidung 3 im Ankerloch 2.

Eine radiale Dicke beziehungsweise Höhe der Schweißstreifen 17, 18 und damit auch der Schneidelemente 16 nimmt von der Umfangsmitte der Spreizelemente 14 in der Umfangsrichtung entgegen der vorgesehenen Drehrichtung der Spreizhülse 9 bei der Erstellung der Hinterschneidung 3 im Ankerloch 2 ab derart, dass die Schneidelemente 16 an ihrem in der vorgesehenen Drehrichtung vorderen Ende radial am dicksten beziehungsweise am höchsten sind. In Richtung der Längsachse 10 gesehen sind die Schneidelemente 16 dadurch sägezahnförmig beziehungsweise keilförmig. Möglich ist die sich in der Umfangsrichtung ändernde Dicke der Schneidelemente 16 auch durch in der Umfangsrichtung unterschiedlich lange innere und äußere Schweißstreifen 17, 18 und/oder durch eine Änderung eines Abstands eines Fokus eines Laserstrahls von der Außenseite 15 der Spreizelemente 14 beim Laserauftragschweißen. Nach dem Aufschweißen der Schweißstreifen 17, 18 werden die Schweißstreifen 17, 18 nicht weiter behandelt oder umgeformt. Die Schweißstreifen 17, 18 bilden die Schneidelemente 16 des Hinterschnittankers 1.

Es muss nicht an jedem der Spreizelemente 14 ein Schneidelement 16 angeordnet sein, sondern es genügt, wenn an mindestens einem Spreizelement 14 ein Schneidelement 16 angeordnet ist. Vorzugsweise sind an mehreren oder an allen Spreizelementen 14 jeweils ein oder eventuell auch mehrere Schneidelemente 16 angeordnet.

Eine Verankerung des erfindungsgemäßen Hinterschnittankers 1 in dem Ankerloch 2 zeigt Figur 3: Zur Verankerung in dem Ankergrund 4 wird der Hinterschnittanker 1 mit seinem Spreizkörper 7 voraus in das Ankerloch 2 eingebracht, bis der Spreizkörper 7 beziehungsweise das vordere Ende 8 des Ankerschafts 5 auf einem Lochgrund des Ankerlochs 2 aufsitzt. Die Spreizhülse 9 wird mit einem rohrförmigen Drehantriebswerkzeug 20 oder auch in anderer Weise drehend auf dem Ankerschaft 5 angetrieben und in Richtung der Längsachse 10 in Richtung des Spreizkörpers 7 vorgeschoben, wodurch die Spreizelemente 14 auf den Spreizkörper 7 aufgeschoben und vom Spreizkörper 7 von der Längsachse 10 des Hinterschnittankers 1 weg nach außen geschwenkt werden. Die Schneiden 19 der Schneidelemente 16 dringen in eine Lochwand des Ankerlochs 2 ein und erstellen durch die Drehung und den axialen Vorschub die Hinterschneidung 3 in Form einer umlaufenden, kegelstumpfförmigen Aufweitung des Ankerlochs 2. Nachdem die Hinterschneidung 3 erstellt worden ist, wird das Drehantriebswerkzeug 20 vom Ankerschaft 5 abgezogen. Die nach außen in die Hinterschneidung 3 geschwenkten, das heißt aufgespreizten Spreizelemente 14 hintergreifen die Hinterschneidung 3, wodurch sie den Hinterschnittanker 1 durch Formschluss in der Hinterschneidung 3 im Ankerloch 2 halten. Der erfindungsgemäße, selbstschneidende Hinterschnittanker 1 ist durch Formschluss im Ankerloch 2 verankert.

An einer Innenseite weisen die Spreizelemente 16 jeweils ein Kragelement 21 auf, die nach vorn in Richtung des Spreizkörpers 7 von einem Grundkörper des Spreizelements 14 abstehen. Die Kragelemente 21 sind durch einen in der Umfangsrichtung verlaufenden, V-förmigen Schlitz 22 in vorderen Stirnseiten der Spreizelemente 14 gebildet.

Die Kragelemente 21 stehen in der Längsrichtung nach vorn in Richtung des Spreizkörpers 7 über die Schneidelemente 16 über. Dadurch stützen die Kragelemente 21 die Spreizelemente 14 in axialer Richtung vor den Schneidelementen 16 am Spreizkörper 7 ab. Dadurch ergibt sich ein Hebelarm, wodurch eine Spreizkraft, mit der der Spreizkörper 7 die Spreizelemente 14 beim Aufspreizen radial nach außen drückt, kleiner als eine Spreizkraft ist, mit der die Schneidelemente 16 beim Aufspreizen im Ankerloch 2 radial nach außen gegen die Lochwand des Ankerlochs 2 gedrückt werden. Die nach vorn in Richtung des Spreizkörpers 7 überstehenden Kragelemente 21 verstärken die Spreizkraft, mit der die Schneidelemente 16 beim Aufspreizen nach außen gegen beziehungsweise in die Lochwand des Ankerlochs 2 gedrückt werden.

### Bezugszeichenliste

- 1: Hinterschnittanker
- 2: Ankerloch
- 3: Hinterschneidung
- 4: Ankergrund
- 5: Ankerschaft
- 6: Gewinde
- 7: Spreizkörper
- 8: vorderes Ende des Ankerschafts 5
- 9: Spreizhülse
- 10: Längsachse
- 11: Längsschlitz
- 12: vorderes Ende der Spreizhülse 9 beziehungsweise des Spreizelements 14
- 13: Spreizabschnitt
- 14: Spreizelement
- 15: Außenseite
- 16: Schneidelement
- 17: innerer Schweißstreifen
- 18: äußerer Schweißstreifen
- 19: Schneide
- 20: Drehantriebswerkzeug
- 21: Kragelement
- 22: V-förmiger Schlitz

## Patentansprüche

1. Selbstschneidender Hinterschnittanker (1), der sich entlang einer Längsachse (10) erstreckt, mit einem Spreizkörper (7) und mit einer Spreizhülse (9), die an ihrem vorderen Ende (12) mindestens ein Spreizelement (14) aufweist, das durch Aufschieben der Spreizhülse (9) in Richtung der Längsachse (10) des Hinterschnittankers (1) in einer Spreizrichtung auf den Spreizkörper (7) von der Längsachse (10) weg nach außen schwenkbar ist, wobei auf eine Außenseite (15) des mindestens einen Spreizelements (14) ein Schneidelement (16) durch Auftragschweißen aufgebracht ist, **dadurch gekennzeichnet, dass** das Schneidelement (16) mindestens zwei ineinander übergehende Schweißstreifen (17, 18) aufweist, die in Richtung der Längsachse (10) des Hinterschnittankers (1) hintereinander liegen.

2. Hinterschnittanker (1) nach Anspruch 1, **dadurch gekennzeichnet, dass** das Schneidelement (16) mindestens zwei Schweißstreifen (17, 18) radial zur Längsachse (10) aufeinander auf der Außenseite (15) des Spreizelements (14) der Spreizhülse (9) aufweist.

3. Hinterschnittanker (1) nach Anspruch 2, **dadurch** g**ekennzeichnet, dass** radial innere Schweißstreifen (17), die unmittelbar auf das Spreizelement (16) aufgeschweißt sind, dünner sind als radial äußere Schweißstreifen (18), die radial zur Längsachse (10) außen auf die inneren Schweißstreifen (17) aufgeschweißt sind.

4. Hinterschnittanker (1) nach einem oder mehreren der Ansprüche 1 bis 3, **dadurch gekennzeichnet, dass** zumindest ein Schweißstreifen (17, 18) in einer Umfangsrichtung der Spreizhülse (9) dünner wird.

5. Hinterschnittanker (1) nach einem oder mehreren der Ansprüche 2 bis 4, **dadurch gekennzeichnet, dass** die radial aufeinander angeordneten Schweißstreifen (17, 18) in der Umfangsrichtung der Spreizhülse (9) unterschiedlich lang sind.

6. Hinterschnittanker (1) nach einem oder mehreren der Ansprüche 2 bis 5, **dadurch gekennzeichnet, dass** ein radial äußerer Schweißstreifen (18) in Richtung der Längsachse (10) nach vorne über einen radial inneren Schweißstreifen (17) und/oder nach vorn über das vordere Ende (12) des mindestens einen Spreizelements (14) der Spreizhülse (9) übersteht.

7. Hinterschnittanker (1) nach einem oder mehreren der Ansprüche 2 bis 6, **dadurch gekennzeichnet, dass** vier Schweißstreifen (17, 18) zur Bildung des Schneidelements (16) außen auf die Außenseite (15) des mindestens einen Spreizelements (16) der Spreizhülse (9) aufgebracht sind, wobei zwei radial innere Schweißstreifen (17) in der Längsrichtung des Hinterschnittankers (1) hintereinander angeordnet sind und zwei radial äußere Schweißstreifen (18) radial außen auf die beiden radial inneren Schweißstreifen (17) aufgebracht sind.

8. Hinterschnittanker (1) nach einem oder mehreren der vorstehenden Ansprüche, **dadurch gekennzeichnet, dass** ein Ende des Schneidelements (16) in der Umfangsrichtung der Spreizhülse (9) in einer Mitte auf dem mindestens einen Spreizelement (14) angeordnet ist.

9. Verfahren zur Herstellung eines selbstschneidenden Hinterschnittankers nach einem oder mehreren der vorhergehenden Ansprüche, **dadurch gekennzeichnet, dass** die Schweißstreifen (17, 18) durch Auftragschweißen hergestellt sind.

10. Verfahren nach Anspruch 9, **dadurch gekennzeichnet, dass** zu einer Erhöhung einer Dicke beziehungsweise Höhe der Auftragschweißung radial zur Längsachse (10) mit einer zunehmenden Schweißgeschwindigkeit oder zur Verringerung der Dicke beziehungsweise Höhe der Auftragschweißung radial zur Längsachse (10) mit einer abnehmenden Schweißgeschwindigkeit auftraggeschweißt wird.

11. Verfahren nach Anspruch 9 oder 10, **dadurch gekennzeichnet, dass** zu einer Änderung der Dicke beziehungsweise Höhe der Auftragschweißung radial zur Längsrichtung (10) ein Wärmeeintrag während der Auftragschweißung geändert wird.

12. Verfahren nach einem oder mehreren der Ansprüche 9 bis 11, **dadurch gekennzeichnet, dass** die Auftragschweißung als Laserauftragschweißung erfolgt.

13. Verfahren nach einem oder mehreren der Ansprüche 9 bis 12, **dadurch gekennzeichnet, dass** zu einer Änderung der Dicke beziehungsweise Höhe der Auftragschweißung radial zur Längsachse (10) eine Laserleistung während der Auftragschweißung geändert wird.

14. Verfahren nach einem oder mehreren der Ansprüche 9 bis 13, **dadurch gekennzeichnet, dass** zur Änderung der Dicke oder Höhe der Auftragschweißung radial zur Längsachse (10) ein Abstand eines Fokus eines Laserstrahls von der Außenseite (15) des Spreizelements (14) der Spreizhülse (9) während der Auftragschweißung geändert wird.

## Claims

1. Self-tapping undercut anchor (1) extending along a longitudinal axis (10), with an expansion body (7) and an expansion sleeve (9) which has at least one expansion element (14) at its front end (12), which is pushed onto the expansion body (7) in a spreading direction away from the longitudinal axis (10) of the undercut anchor (1) by pushing the expansion sleeve (9) in the direction of the longitudinal axis (10) of the undercut anchor (1) in an expansion direction onto the expansion body (7) away from the longitudinal axis (10), wherein a cutting element (16) is applied to an outer side (15) of the at least one expansion element (14) by build-up welding, **characterized in that** the cutting element (16) has at least two weld strips (17, 18) merging into one another, which are located one behind the other in the direction of the longitudinal axis (10) of the undercut anchor (1).

2. . Undercut anchor (1) according to claim 1, **characterized in that** the cutting element (16) has at least two weld strips (17, 18) radially to the longitudinal axis (10) on top of each other on the outer side (15) of the expansion element (14) of the expansion sleeve (9).

3. . Undercut anchor (1) according to claim 2, **characterized in that** radially inner weld strips (17), which are welded directly onto the expansion element (16), are thinner than radially outer weld strips (18), which are welded radially to the longitudinal axis (10) on the outside of the inner weld strips (17).

4. . Undercut anchor (1) according to one or more of claims 1 to 3, **characterized in that** at least one welded strip (17, 18) becomes thinner in a circumferential direction of the expansion sleeve (9).

5. . Undercut anchor (1) according to one or more of claims 2 to 4, **characterized in that** the radially arranged weld strips (17, 18) have different lengths in the circumferential direction of the expansion sleeve (9).

6. . Undercut anchor (1) according to one or more of claims 2 to 5, **characterized in that** a radially outer weld strip (18) protrudes forward in the direction of the longitudinal axis (10) beyond a radially inner weld strip (17) and/or forward beyond the front end (12) of the at least one expansion element (14) of the expansion sleeve (9).

7. . Undercut anchor (1) according to one or more of claims 2 to 6, **characterized in that** four weld strips (17, 18) for forming the cutting element (16) are applied to the outer side (15) of at least one expansion element (16) of the expansion sleeve (9) (9), wherein two radially inner weld strips (17) are arranged one behind the other in the longitudinal direction of the undercut anchor (1) and two radially outer weld strips (18) are applied radially on the outside of the two radially inner weld strips (17).

8. . Undercut anchor (1) according to one or more of the preceding claims, **characterized in that** one end of the cutting element (16) is arranged in the circumferential direction of the expansion sleeve (9) in a center on the at least one expansion element (14).

9. . Method for manufacturing a self-tapping undercut anchor according to one or more of the preceding claims, **characterized in that** the weld strips (17, 18) are produced by build-up welding.

10. . Method according to claim 9, **characterized in that,** in order to increase the thickness or height of the build-up weld radially to the longitudinal axis (10), build-up welding is performed at an increasing welding speed, or, in order to reduce the thickness or height of the build-up weld radially to the longitudinal axis (10), build-up welding is performed at a decreasing welding speed.

11. . Method according to claim 9 or 10, **characterized in that,** in order to change the thickness or height of the build-up weld radially to the longitudinal direction (10), the heat input during the build-up welding is changed.

12. . Method according to one or more of claims 9 to 11, **characterized in that** the build-up welding is performed as laser build-up welding.

13. . Method according to one or more of claims 9 to 12, **characterized in that,** in order to change the thickness or height of the build-up weld radially to the longitudinal axis (10), the laser power is changed during the build-up welding.

14. . Method according to one or more of claims 9 to 13, **characterized in that,** in order to change the thickness or height of the build-up welding radially to the longitudinal axis (10), a distance of a focus of a laser beam from the outer side (15) of the expansion element (14) of the expansion sleeve (9) is changed during the build-up welding.

## Revendications

1. Ancrage à contre-dépouille autotaraudeur (1) s'étendant le long d'un axe longitudinal (10), comprenant un corps d'expansion (7) et une douille d'expansion (9) qui présente, à son extrémité avant (12), au moins un élément d'expansion (14) qui, par enfilage de la douille d'écartement (9) dans la direction de l'axe longitudinal (10) de l'ancrage à contre-dépouille (1) dans une direction d'écartement sur le corps d'expansion (7) peut pivoter vers l'extérieur à partir de l'axe longitudinal (10), un élément de coupe (16) étant appliqué par soudage par rechargement sur une face extérieur (15) du au moins un élément d'expansion (14), **caractérisé en ce que** l'élément de coupe (16) comporte au moins deux bandes soudées (17, 18) qui se rejoignent et qui sont disposées l'une derrière l'autre dans la direction de l'axe longitudinal (10) de l'ancrage à contre-dépouille (1).

2. Ancrage à contre-dépouille (1) selon la revendication 1, **caractérisé en ce que** l'élément de coupe (16) comporte au moins deux bandes soudées (17, 18) disposées radialement par rapport à l'axe longitudinal (10) l'une sur l'autre sur la face extérieure (15) de l'élément d'expansion (14) de la douille d'expansion (9).

3. Ancrage à contre-dépouille (1) selon la revendication 2, **caractérisé en ce que** les bandes soudées radialement intérieures (17), qui sont soudées directement sur l'élément d'expansion (16), sont plus minces que les bandes soudées radialement extérieures (18), qui sont soudées radialement par rapport à l'axe longitudinal (10) à l'extérieur sur les bandes soudées intérieures (17).

4. Ancrage à contre-dépouille (1) selon une ou plusieurs des revendications 1 à 3, **caractérisé en ce que** au moins une bande soudée (17, 18) s'amincit dans une direction circonférentielle de la douille d'expansion (9).

5. Ancrage à contre-dépouille (1) selon une ou plusieurs des revendications 2 à 4, **caractérisé en ce que** les bandes soudées (17, 18) disposées radialement les unes sur les autres ont des longueurs différentes dans la direction circonférentielle de la douille d'expansion (9).

6. Ancrage à contre-dépouille (1) selon une ou plusieurs des revendications 2 à 5, **caractérisé en ce qu**'une bande soudée radialement extérieure (18) dépasse vers l'avant dans la direction de l'axe longitudinal (10) au-delà d'une bande soudée intérieure (17) et/ou vers l'avant au-delà de l'extrémité avant (12) d'au moins un élément d'expansion (14) de la douille d'expansion (9).

7. Ancrage à contre-dépouille (1) selon une ou plusieurs des revendications 2 à 6, **caractérisé en ce que** quatre bandes soudées (17, 18) sont appliquées à l'extérieur sur la face extérieure (15) de l'au moins un élément d'expansion (16) de la douille d'expansion (9), deux bandes soudées (17) radialement intérieures étant disposées l'une derrière l'autre dans la direction longitudinale de l'ancrage à contre-dépouille (1) et deux bandes soudées (18) radialement extérieures étant appliquées radialement à l'extérieur sur les deux bandes soudées (17) radialement intérieures.

8. Ancrage à contre-dépouille (1) selon une ou plusieurs des revendications précédentes, **caractérisé en ce que** une extrémité de l'élément de coupe (16) est disposée dans la direction circonférentielle de la douille d'expansion (9) en un centre sur le au moins un élément d'expansion (14).

9. Procédé de fabrication d'un ancrage à contre-dépouille autotaraudeur selon une ou plusieurs des revendications précédentes, **caractérisé en ce que** les bandes soudées (17, 18) sont réalisées par soudage par rechargement.

10. Procédé selon la revendication 9, **caractérisé en ce que**, pour augmenter l'épaisseur ou la hauteur du soudage par rechargement radialement par rapport à l'axe longitudinal (10), on soude par rechargement à une vitesse de soudage croissante, ou pour réduire l'épaisseur ou la hauteur du soudage par rechargement radialement par rapport à l'axe longitudinal (10), on soude par rechargement à une vitesse de soudage décroissante.

11. Procédé selon la revendication 9 ou 10, **caractérisé en ce que,** pour modifier l'épaisseur ou la hauteur du dépôt de soudure radialement par rapport à l'axe longitudinal (10), l'apport de chaleur pendant le dépôt de soudure est modifié.

12. Procédé selon une ou plusieurs des revendications 9 à 11, **caractérisé en ce que** le rechargement est effectué sous forme de rechargement laser.

13. Procédé selon une ou plusieurs des revendications 9 à 12, **caractérisé en ce que,** pour modifier l'épaisseur ou la hauteur du dépôt de soudure radialement par rapport à l'axe longitudinal (10), la puissance laser est modifiée pendant le dépôt de soudure.

14. Procédé selon une ou plusieurs des revendications 9 à 13, **caractérisé en ce que,** pour modifier l'épaisseur ou la hauteur du dépôt par soudage radialement par rapport à l'axe longitudinal (10), on modifie pendant le dépôt par soudage la distance entre le foyer d'un faisceau laser et la face extérieure (15) de l'élément d'expansion (14) de la douille d'expansion (9).
